# EUROPÄISCHE PATENTSCHRIFT

(11) **EP 2 427 927 B1**
(45) Veröffentlichungstag und Bekanntmachung des Hinweises auf die Patenterteilung: **05.06.2013**
(21) Anmeldenummer: 10710826.8
(22) Anmeldetag: 16.03.2010
(51) Int. Cl.: H01M 2/02, H01M 2/04, H01M 4/70, H01M 10/04

(54) **KNOPFZELLE UND VERFAHREN ZU IHRER HERSTELLUNG**
BUTTON CELL AND METHOD FOR PRODUCTION THEREOF
PILE BOUTON ET SON PROCÉDÉ DE FABRICATION

(30) Priorität: 09.05.2009 DE 102009020803
(43) Veröffentlichungstag der Anmeldung: 14.03.2012
(73) Patentinhaber: VARTA Microbattery GmbH, 73479 Ellwangen (DE)
(72) Erfinder: SCHIMMELE, Richard, 73489 Jagstzell (DE); GLOCK WAGNER, Christoph, 73479 Ellwangen (DE); WAGNER, Horst, 73494 Rosenberg (DE)
(74) Vertreter: Patentanwälte Ruff, Wilhelm, Beier, Dauster & Partner
(86) Internationale Anmeldenummer: PCT/EP2010/053351
(87) Internationale Veröffentlichungsnummer: WO 2010/130480

(56) Entgegenhaltungen:
- DE-A1-102005 058 132
- GB-A- 2 110 464
- JP-A- 10 154 515
- JP-A- 57 143 268
- JP-A- 57 202 653
- JP-A- 2008 258 145

## Beschreibung

Die vorliegende Erfindung betrifft Knopfzellen mit einem mehrteiligen Gehäuse zur Aufnahme von Elektroden und Separator sowie ein Verfahren, das sich zur Herstellung von solchen Knopfzellen eignet.

Knopfzellen mit Elektroden aus Metallen wie Lithium, Indium oder einer entsprechenden Legierung sind in den verschiedensten Ausführungsformen bekannt. Besonders bevorzugt werden in solchen Knopfzellen Lithium/Aluminium-Legierungen oder auch Lithium/Indium-Legierungen als negatives aktives Elektrodenmaterial verwendet. Als positives aktives Elektrodenmaterial kommen Lithium interkalierende Materialien wie z.B. LiMOₓ mit M = Co, Ni oder Mn und eventuellen Dotierungen wie z. B. Al, Ti, Mg, Zn oder Cr, Graphit oder Lithium-Eisen-Phosphat in Frage.

Zur Herstellung solcher Knopfzellen werden in aller Regel die negativen Elektrodenmaterialien in ein entsprechendes negatives Gehäusehalbteil eingebracht, wohingegen die positiven Elektrodenmaterialien in ein dazugehöriges positives Gehäusehalbteil eingebracht werden. Nach Zudosieren eines geeigneten Elektrolyten sowie gegebenenfalls der Montage eines Separators können die beiden Gehäusehalbteile unter Einfügung einer Dichtung zusammengesetzt werden. Das Verschließen der Zelle kann anschließend insbesondere durch Verbördelung erfolgen.

Problematisch ist bei solchen Knopfzellen häufig jedoch die Anbindung der Elektroden, insbesondere die Anbindung der metallischen negativen Elektroden, an das Gehäuse. Üblicherweise werden die metallischen Elektroden direkt in das erwähnte negative Gehäusehalbteil eingestanzt, also unter Druck eingepresst, was allein jedoch noch keine gute elektrische Anbindung an das Gehäuse garantiert. Vielmehr wird häufig als zusätzliche Maßnahme vor dem Einstanzen der Elektroden ein Ableiternetz in das negative Gehäusehalbteil eingeschweißt. Alternativ kann das negative Elektrodenmaterial auch zuerst auf ein solches Netz aufgebracht (z.B. über ein galvanisches Verfahren) und erst dann zusammen mit dem Netz in das Gehäusehalbteil eingebracht werden.

Aus der JP 57-202653 ist eine Knopfzelle bekannt, bei der sowohl der Zellenbecher als auch der Zellendeckel auf der Innenseite Vertiefungen aufweisen, die zu einer besseren Haftung der Elektrodenmaterialien am Gehäuse beitragen.

Aus der JP 57-143268 ist bekannt, dass die Innenseite eines Knopfzellendeckels mit einem Substrat ausgekleidet werden kann, das eine Anzahl von länglichen Vertiefungen aufweist, in die Elektrodenmaterial zwecks besserer Haftung eingepresst werden kann.

Die GB 2 110 464 A betrifft eine Knopfzelle, bei der die Innenseite des Knopfzellengehäuses mittels eines Stempels aufgeraut werden kann.

Aus der JP 10-154515 ist ein netz- oder gitterförmiges Streckmetallsubstrat mit wellenförmigem Querschnitt bekannt. Elektrodenmaterialien können als Paste auf dieses Substrat aufgetragen werden, das in der entstehenden Elektrode als Ableiter fungiert.

Der vorliegenden Erfindung lag die Aufgabe zugrunde, Knopfzellen der eingangs beschriebenen Art bereitzustellen, bei denen die negative Elektrode besser an das Gehäuse angebunden ist als dies bei vergleichbaren Knopfzellen aus dem Stand der Technik bekannt ist, so dass entsprechend auf technische Hilfsmittel wie das erwähnte zusätzliche Ableiternetz verzichtet werden kann.

Diese Aufgabe wird gelöst durch die Knopfzelle mit den Merkmalen des Anspruchs 1 sowie das Verfahren mit den Merkmalen des Anspruchs 11. Bevorzugte Ausführungsformen der erfindungsgemäßen Knopfzelle sind in den abhängigen Ansprüchen 2 bis 10 definiert. Bevorzugte Ausführungsformen des erfindungsgemäßen Verfahrens finden sich in den abhängigen Ansprüchen 12 und 13. Der Wortlaut sämtlicher Ansprüche wird hiermit durch Bezugnahme zum Inhalt dieser Beschreibung gemacht.

Wie die eingangs erwähnten Knopfzellen weist auch eine erfindungsgemäße Knopfzelle ein mehrteiliges Gehäuse auf, das zur Aufnahme von Elektroden und Separator dient. Gegenüber herkömmlichen Knopfzellen zeichnet sich eine erfindungsgemäße Knopfzelle allerdings dadurch aus, dass zwischen dem Gehäuse und zumindest einer der Elektroden eine formschlüssige Verbindung besteht. Die Anbindung dieser zumindest einen Elektrode an das Gehäuse ist also zumindest teilweise durch ein Ineinandergreifen der zumindest einen Elektrode und des Gehäuses gewährleistet. Zwischen der zumindest einen Elektrode und dem Gehäuse besteht entsprechend eine mechanische Verbindung, die nicht ohne Zerstörung oder zumindest Verformung eines der beiden Bindungspartner gelöst werden kann.

Erfindungsgemäß besteht zumindest eine formschlüssige Verbindung zwischen dem Gehäuse und der Anode einer erfindungsgemäßen Knopfzelle.

Bei der Anode handelt es sich insbesondere um eine metallische Anode, insbesondere eine solche, wie sie oben bereits erwähnt wurde. Besonders bevorzugt werden metallisches Lithium oder metallisches Indium enthaltende Elektroden oder aus diesen Materialien bestehende Elektroden eingesetzt, es kommen grundsätzlich jedoch beispielsweise auch Zinkanoden in Frage. Entsprechend kann es sich bei der erfindungsgemäßen Knopfzelle beispielsweise um eine Zink-Luft-Zelle oder um eine Lithium-Zelle handeln.

Das mehrteilige Gehäuse einer erfindungsgemäßen Knopfzelle umfasst zwei Gehäusehalbteile, nämlich einen Zellenbecher und einen Zellendeckel, wobei die Anode formschlüssig mit dem Zellendeckel verbunden ist. Bei dem Zellendeckel handelt es sich also um ein negatives Gehäusehalbteil, wie es oben bereits erwähnt wurde.

Ein Netz wie für das erwähnte negative Gehäusehalbteil ist bei einer erfindungsgemäßen Knopfzelle überflüssig. Erfindungsgemäße Knopfzellen weisen entsprechend in bevorzugten Ausführungsformen eine negative Elektrode in einem negativen Gehäusehalbteil ohne zusätzliches Ableiternetz auf. Die negative Elektrode ist unmittelbar mit dem Gehäuse über die erwähnte formschlüssige Verbindung verbunden.

Eine erfindungsgemäße Knopfzelle zeichnet sich dadurch aus, dass der Zellendeckel auf seiner Innenseite mindestens eine mit einer Hinterschneidung versehene Vertiefung aufweist. Diese Vertiefung ist bei einer erfindungsgemäßen Knopfzelle vorzugsweise zumindest teilweise mit Elektrodenmaterial, vorzugsweise mit dem Material der Anode, befüllt, insbesondere derart, dass die zumindest eine Elektrode, insbesondere die Anode einer erfindungsgemäßen Knopfzelle, die mindestens eine Hinterschneidung hintergreift. So kann der erwähnte Formschluss zwischen der zumindest einen Elektrode und dem Gehäuse zustandekommen.

Bevorzugt ist die mindestens eine Vertiefung Teil einer dreidimensionalen Prägung auf der Innenseite des Gehäusehalbteils oder Zellendeckels. Die mindestens eine Vertiefung ist also bei einer erfindungsgemäßen Knopfzelle bevorzugt durch einen Umformvorgang, insbesondere einen Prägevorgang, gebildet.

Die mindestens eine Vertiefung, insbesondere die Prägung mit der mindestens einen Vertiefung, findet sich besonders bevorzugt im Bereich des Bodens des Gehäusehalbteils, insbesondere im Bereich des Bodens des Zellendeckels einer erfindungsgemäßen Knopfzelle. Für eine erfindungsgemäße Knopfzelle geeignete Zellendeckel weisen in der Regel stets einen solchen Deckelboden auf, der in der Regel im wesentlichen eben ausgebildet ist und im Betrieb einen Pol der Knopfzehe ausbildet, an dem die Stromabnahme durch einen Verbraucher erfolgen kann. An diesen bevorzugt ebenen Bodenbereich schließen sich in der Regel ein umlaufender Mantelbereich und/oder ein umlaufender Randbereich an. Der Mantelbereich ist vorzugsweise zylindrisch ausgebildet. Der Randbereich umfasst üblicherweise eine Schnittkante, die gegebenenfalls nach außen oder innen umgebogen sein kann.

Einen analogen Aufbau weist vorzugsweise auch das zweite Gehäusehalbteil einer erfindungsgemäßen Knopfzelle, der Zellenbecher, auf.

Verbunden sind der Zellenbecher und der Zellendeckel in aller Regel über eine Dichtung. Dabei kann es sich beispielsweise um ein Spritzgussteil oder aber um eine Foliendichtung handeln. Geeignete Dichtungen sind dem Fachmann bekannt.

Die oben genannte mindestens eine Vertiefung kann grundsätzlich jede beliebige Geometrie aufweisen. In Frage kommen punktförmige Vertiefungen ebenso wie längliche. Letztere sind allerdings für eine erfindungsgemäße Knopfzelle bevorzugt, so handelt es sich bei der mindestens einen Vertiefung insbesondere um mindestens eine längliche Vertiefung nach Art einer Rille oder einer Kerbe.

Die Anordnung der mindestens einen Vertiefung auf der Innenseite des Gehäusehalbteils ist grundsätzlich beliebig. Vorzugsweise bildet die mindestens eine Vertiefung jedoch ein regelmäßiges Muster aus. So ist es besonders bevorzugt, dass es sich bei der mindestens einen Vertiefung um konzentrisch angeordnete, kreisförmige Rillen handelt.

Auch der Querschnitt der mindestens einen Vertiefung kann grundsätzlich die verschiedensten Geometrien aufweisen. Besonders bevorzugt weist die mindestens eine Vertiefung jedoch einen im wesentlichen (abgesehen von der Hinterschneidung) rechteckigen oder fünfeckförmigen Querschnitt auf. Hierzu jedoch später noch mehr.

Die mindestens eine Hinterschneidung wird vorzugsweise durch einen Vorsprung oder eine Wulst gebildet, der bzw. die sich entlang der oberen Kante der mindestens einen Vertiefung zieht. Im Bereich dieses Vorsprungs oder dieser Wulst ist der Querschnitt der mindestens einen Vertiefung im Vergleich zu mindestens einem tieferliegenden Bereich der Vertiefung verengt.

Das Gehäuse einer erfindungsgemäßen Knopfzelle besteht vorzugsweise aus einem oder mehreren Metallen. Besonders bevorzugt kann als Gehäusematerial beispielsweise vernickeltes Tiefziehblech oder aber ein Trimetall zum Einsatz kommen. Geeignete Materialien sind dem Fachmann grundsätzlich bekannt.

Die Tiefe der mindestens einen Vertiefung beträgt vorzugsweise zwischen 5 % und 50 % der Dicke des Gehäuses einer erfindungsgemäßen Knopfzelle, wobei hier als Bezugsgröße insbesondere die maximale Dicke des Gehäuses im Bereich des Becherbodens dient. Besonders bevorzugt beträgt die Tiefe der mindestens einen Vertiefung zwischen 5 % und 25 % der Dicke des Gehäuses in diesem Bereich.

Wie bereits oben erwähnt, ist auch ein Verfahren, gemäß dem sich die beschriebenen erfindungsgemäßen Knopfzellen herstellen lassen, Gegenstand der vorliegenden Erfindung.

Bei einem erfindungsgemäßen Verfahren wird ein Gehäusehalbteil, insbesondere ein Gehäusedeckel, bereitgestellt, das oder der auf seiner Innenseite mindestens eine mit mindestens einer Hinterschneidung versehene Vertiefung aufweist. Solche Gehäusehalbteile wurden oben bereits beschrieben, auf die entsprechenden Ausführungen wird hiermit Bezug genommen und verwiesen.

Insbesondere zeichnet sich ein erfindungsgemäßes Verfahren dadurch aus, dass in einen solches Gehäusehalbteil ein Elektrodenmaterial, insbesondere ein Anodenmaterial, derart eingebracht wird, dass eine formschlüssige Verbindung zwischen der resultierenden Elektrode und dem Gehäusedeckel entsteht.

Dies erfolgt bevorzugt dadurch, dass das Elektrodenmaterial unter Druck in das Gehäusehalbteil, insbesondere den Deckel, eingebracht, insbesondere eingepresst, wird. Der Druck muss dabei ausreichend hoch sein, dass das Elektrodenmaterial die mindestens eine Vertiefung bis hinter die Hinterschneidung ausfüllt, so dass es zu einem Hintergreifen der Hinterschneidung und damit zu der gewünschten formschlüssigen Verbindung kommt. Der dafür nötige Druck hängt von den Eigenschaften, insbesondere der Härte und Verformbarkeit, des jeweiligen Elektrodenmaterials ab. So lässt sich ein Formschluss mit den relativ weichen Lithium-Indium-Legierungen schon bei sehr niedrigen Drücken erreichen.

Alternativ kann das Elektrodenmaterial z.B. durch Abscheidung aus einem Elektrolyten in das Gehäusehalbteil eingebracht werden.

Nach dem Einbringen der Elektrode kann das Gehäusehalbteil mit einem entsprechenden zweiten Halbteil kombiniert werden und zu einer Knopfzelle zusammengesetzt werden. Wie eingangs beschrieben, kann das Verschließen der Knopfzelle beispielsweise durch Verbördeln der beiden Gehäuseteile erfolgen, wobei vor dem Verschließen natürlich gegebenenfalls noch die weiteren Komponenten der Knopfzelle wie beispielsweise der Separator oder ein geeigneter Elektrolyt eingebracht werden.

In einem erfindungsgemäßen Verfahren bevorzugt verbaute Gehäusehalbteile werden u.a. über ein Prägeverfahren hergestellt. Ein solches Prägeverfahren kann Teilschritt des erfindungsgemäßen Verfahrens zur Herstellung von Knopfzellen sein, es ist aber auch unabhängig davon Gegenstand der vorliegenden Erfindung. Besonders bevorzugt wird zur Herstellung eines geeigneten Gehäusehalbteils in ein unbearbeitetes Gehäusehalbteil mit einem ersten Prägestempel mindestens eine erste Vertiefung eingeprägt. Diese mindestens eine erste Vertiefung kann beispielsweise einen rechteckigen oder fünfeckförmigen Querschnitt aufweisen, abhängig von dem verwendeten Prägestempel. In einem weiteren Schritt wird dann anschließend unter Verwendung eines zweiten Prägestempels die mindestens eine Hinterschneidung erzeugt. Dazu wird vorzugsweise mit dem zweiten Prägestempel mindestens eine weitere Vertiefung in das Gehäusehalbteil eingeprägt und zwar derart, dass beim Einprägen der Querschnitt der mindestens einen ersten Vertiefung, insbesondere im Bereich der Oberkante der Vertiefung, verengt wird. Mit anderen Worten, das Einprägen der mindestens einen weiteren Vertiefung erfolgt so nahe an der mindestens einen ersten Vertiefung, dass der Rand oder die Ränder der ersten Vertiefung nach innen gedrückt werden.

Diese mindestens eine weitere Vertiefung kann beispielsweise einen keilförmigen Querschnitt aufweisen, abhängig von dem verwendeten Prägestempel, grundsätzlich ist die Geometrie des Querschnitts der mindestens einen weiteren Verteifung jedoch irrelevant. Die mindestens eine weitere Vertiefung dient nur dem Zweck, die mindestens eine erst Vertiefung mit mindestens einer Hinterschneidung zu versehen.

Diese Vorgehensweise sowie die bereits genannten sowie weitere Vorteile der Erfindung ergeben sich auch aus der nachfolgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

- Fig. 1: zeigt den Querschnitt des Zellendeckels einer bevorzugten Ausführungsform einer erfindungsgemäßen Knopfzelle.
- Fig. 2: zeigt im Querschnitt einen ersten und einen zweiten Prägestempel, mit denen sich ein Zellendeckel gemäß Fig. 1 herstellen lässt.

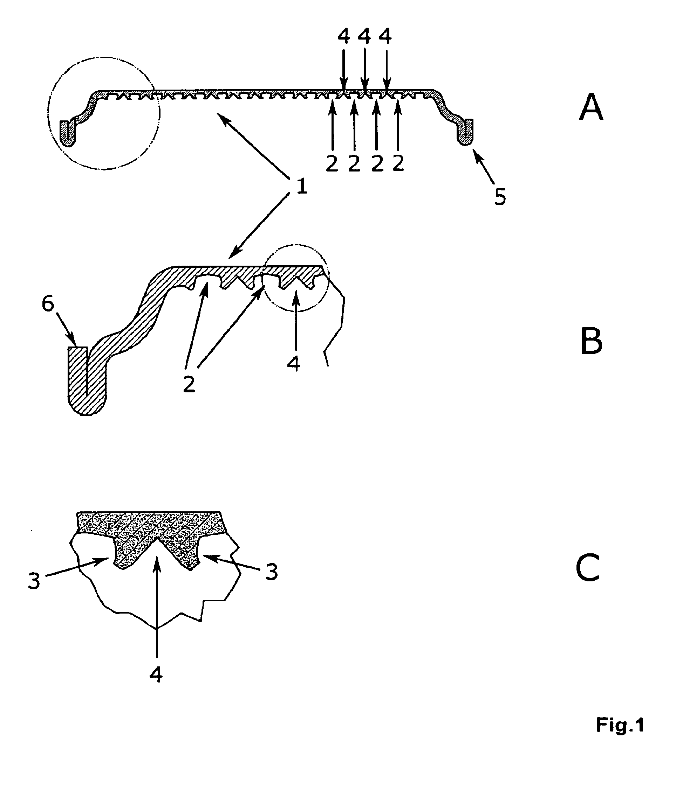

In **Fig. 1** ist der Querschnitt eines Zellendeckels **1** einer bevorzugten Ausführungsform einer erfindungsgemäßen Knopfzelle einmal in seiner Gesamtheit (A) und zum anderen ausschnittweise vergrößert (B und C) dargestellt. Der Ausschnitt C entspricht dabei dem im Ausschnitt B kreisförmig umrandeten Teilausschnitt, der Ausschnitt B entspricht wiederum dem kreisförmig umrandeten Teilausschnitt in der Gesamtdarstellung A.

In der Gesamtdarstellung A ist gesamte Querschnitt des Zellendeckels **1** mit einem umlaufenden Rand **5** mit nach außen umgeschlagener Schnittkante **6** sowie einem im wesentlichen kreisförmigen und ebenen Bodenbereich dargestellt. Letzterer weist auf seiner Innenseite eine regelmäßige Abfolge von Vertiefungen **2** und **4** auf. Die Vertiefungen **2** weisen in erster Näherung einen im wesentlichen rechteckförmigem Querschnitt auf, die Vertiefungen **4** einen im wesentlichen keilförmigen. Zwischen jeweils zwei benachbarten Vertiefungen **2** ist eine keilförmige Vertiefung **4** angeordnet.

In den Darstellungen B und C sind die Vertiefungen **2** mit der mindestens einen Hinterschneidung **3** vergrößert dargestellt. In der vergrößerten Darstellung wird deutlich, dass der Boden der Vertiefungen **2** nicht vollständig eben ausgebildet ist, sondern zur Mitte der Vertiefungen **2** hin leicht abfällt. Der in erster Näherung im wesentlichen rechteckförmige Querschnitt der Vertiefungen **2** ließe sich also auch als im wesentlichen fünfeckförmig beschreiben. Weiterhin gut zu erkennen sind die Hinterschneidungen **3,** die dadurch gebildet sind, dass die Ränder der Vertiefungen **2** etwas nach innen gedrückt sind, was eine Folge der keilförmigen Vertiefungen **4** ist. Die Ränder bzw. die Kanten der Vertiefungen **2** bilden einen Vorsprung aus, der den Querschnitt der Vertiefungen **2** an ihrer Oberkante verengt. Wird z.B. eine metallische Elektrode unter Druck gegen die Innenseite des Zellendeckelbodens gepresst, so kann Elektrodenmaterial in die Vertiefungen **2** eindringen, wobei eine Elektrode resultiert, die die Hinterschneidungen **3** hintergreift und mit dem Zellendeckel **1** unmittelbar formschlüssig verbunden ist.

Entsprechend einer oben erwähnten bevorzugten Ausführungsform bilden die Vertiefungen **2** auf der Innenseite des Zellendeckels ein regelmäßiges Muster aus, sie sind nämlich in Form konzentrisch zueinander angeordneter Kreise angeordnet, wobei jeweils zwischen zwei Vertiefungen **2** mit Hinterschneidung eine kreisförmige Vertiefung **4** mit keilförmigem Querschnitt angeordnet ist. Sowohl bei den Verteifungen **2** als auch bei den Vertiefungen **4** handelt es sich also um längliche Vertiefungen in Rillenform.

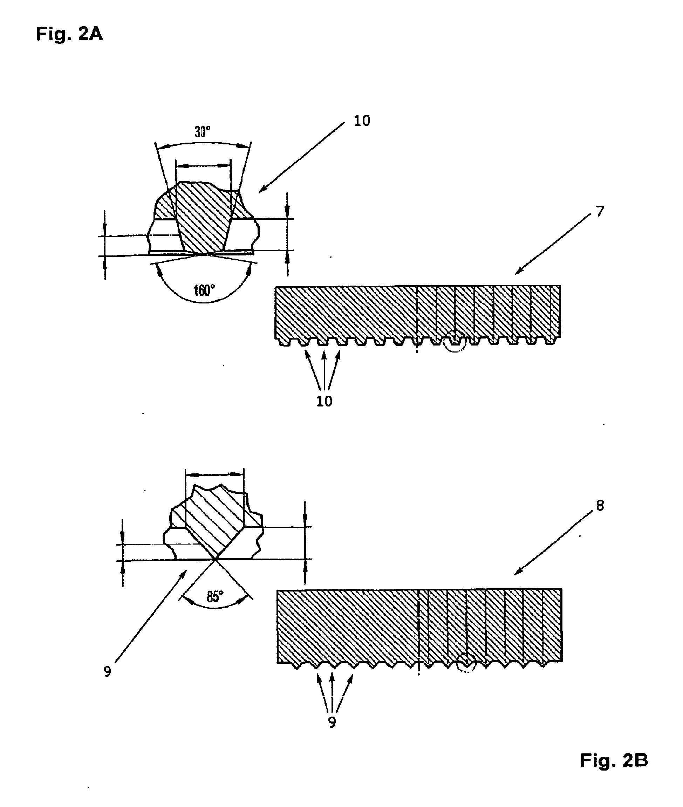

In **Fig. 2** sind ein erster und ein zweiter Prägestempel **7** und **8** im Querschnitt dargestellt, mit denen sich ein Knopfzellendeckel herstellen lässt, wie er in Fig. 1 dargestellt ist. Die beiden Stempel weisen jeweils einen Grundkörper auf, wobei dieser im Falle des Prägestempels **8** keilförmige Erhebungen **9** trägt, deren Querschnitt im wesentlichen dem Querschnitt der Vertiefungen **4** entspricht, während der Prägestempel **7** im wesentlichen fünfeckförmige Erhebungen **10** aufweist. Die Erhebungen **9** und **10** sind jeweils noch in vergrößertem Maßstab dargestellt. In einer Draufsicht (nicht dargestellt)

Mit dem Prägestempel **7** können in einem ersten Schritt Vertiefungen mit im wesentlichen fünfeckförmigem bzw. rechteckigen Querschnitt in einen Zellendeckel eingeprägt werden. Anschließend können mit dem Prägestempel **8** die Vertiefungen **4** mit keilförmigem Querschnitt in den Zellendeckel eingebracht werden, wobei die Dimensionen und Radien der keilförmigen Erhebungen **9** auf dem Prägestempel **8** derart auf die Dimensionen und Radien der im ersten Schritt eingeprägten Vertiefungen (bzw. die Dimensionen und Radien der Erhebungen **10** auf dem Prägestempel **7**) abgestimmt sind, dass jeweils zwischen zwei Vertiefungen mit fünfeckförmigem bzw. rechteckigen Querschnitt eine Vertiefung mit keilförmigem Querschnitt eingeprägt wird. Beim Prägevorgang mit dem Prägestempel **8** werden die Ränder der im ersten Schritt eingeprägten Vertiefungen mit fünfeckförmigem Querschnitt leicht nach innen gedrückt, wobei die Hinterschneidungen **3** entstehen und damit der Querschnitt der Vertiefungen **2** endgültig festgelegt wird.

## Patentansprüche

1. Knopfzelle mit einem mehrteiligen Gehäuse zur Aufnahme von Elektroden und Separator, wobei das mehrteilige Gehäuse einen Zellenbecher und einen Zellendeckel (1) umfasst, **dadurch gekennzeichnet, dass** der Zellendeckel (1) auf seiner Innenseite mindestens eine mit mindestens einer Hinterschneidung (3) versehene Vertiefung (2) aufweist und dass zwischen dem Zellendeckel (1) und der Anode eine formschlüssige Verbindung besteht.

2. Knopfzelle nach Anspruch 1, **dadurch gekennzeichnet, dass** es sich bei der Anode um eine metallische Anode, insbesondere um eine metallisches Lithium oder metallisches Zink enthaltende Anode, handelt.

3. Knopfzelle nach einem der Ansprüche 1 oder 2, **dadurch gekennzeichnet, dass** die mindestens eine Vertiefung (2) Teil einer dreidimensionalen Prägung auf der Innenseite des Zellendeckels (1) ist.

4. Knopfzelle nach einem der vorhergehenden Ansprüche, **dadurch gekennzeichnet, dass** der Zellendeckel (1) die mindestens eine Vertiefung (2), insbesondere die Prägung mit der mindestens einen Vertiefung (2), im Bereich des Deckelbodens aufweist.

5. Knopfzelle nach einem der vorhergehenden Ansprüche, **dadurch gekennzeichnet, dass** es sich bei der mindestens einen Vertiefung (2) um mindestens eine längliche Vertiefung handelt, insbesondere um mindestens eine Rille oder Kerbe.

6. Knopfzelle nach einem der vorhergehenden Ansprüche, **dadurch gekennzeichnet, dass** die mindestens eine Vertiefung (2) ein regelmäßiges Muster ausbildet.

7. Knopfzelle nach einem der vorhergehenden Ansprüche, **dadurch gekennzeichnet, dass** es sich bei der mindestens einen Vertiefung (2) um konzentrisch angeordnete, kreisförmige Rillen handelt.

8. Knopfzelle nach einem der vorhergehenden Ansprüche, **dadurch gekennzeichnet, dass** die mindestens eine Vertiefung (2) einen im wesentlichen rechteckigen oder fünfeckförmigen Querschnitt aufweist.

9. Knopfzelle nach einem der vorhergehenden Ansprüche, **dadurch gekennzeichnet, dass** das Gehäuse aus Metall besteht, insbesondere aus vernickeltem Tiefziehblech.

10. Knopfzelle nach einem der vorhergehenden Ansprüche, **dadurch gekennzeichnet, dass** die Tiefe der mindestens einen Vertiefung (2) zwischen 5 % und 50 % der Dicke des Gehäuses beträgt.

11. Verfahren zur Herstellung einer Knopfzelle, **dadurch gekennzeichnet, dass** ein Gehäusehalbteil (1) bereitgestellt wird, das auf seiner Innenseite mindestens eine mit mindestens einer Hinterschneidung (3) versehene Vertiefung (2) aufweist und wobei in das Halbteil (1) ein Elektrodenmaterial derart eingebracht wird, dass eine formschlüssige Verbindung zwischen der resultierenden Elektrode und dem Halbteil (1) entsteht.

12. Verfahren nach Anspruch 11, **dadurch gekennzeichnet, dass** das Elektrodenmaterial in den Deckel eingepresst wird.

13. Verfahren nach einem der Ansprüche 11 oder 12, **dadurch gekennzeichnet, dass** zur Bereitstellung des Gehäusehalbteils (1) in ein unbearbeitetes Gehäusehalbteil mit einem ersten Prägestempel (7) mindestens eine erste Vertiefung eingeprägt wird und in einem weiteren Schritt die erzeugte mindestens eine erste Vertiefung mit mindestens einer Hinterschneidung (3) versehen wird, indem mit einem zweiten Prägestempel mindestens eine zweite Vertiefung (4) derart in das Gehäusehalbteil eingeprägt wird, dass dabei der Querschnitt der mindestens einen ersten Vertiefung, insbesondere im Bereich ihrer Oberkante, verengt wird.

## Claims

1. A button cell having a multiple-part housing for holding electrodes and a separator, wherein the multiple-part housing comprises a cell cup and a cell cover (1),
**characterized in that**
the cell cover (1) has on its inside at least one recess (2) provided with at least one undercut (3), and **in that** the anode is connected to the cell cover (1) in an interlocking manner.

2. The button cell according to claim 1, **characterized in that** the anode is a metallic anode, in particular an anode containing metallic lithium or metallic zinc.

3. The button cell according to claim 1 or 2, **characterized in that** the at least one recess (2) is part of a three-dimensional impression on the inside of the cell cover (1).

4. The button cell according to any of the preceding claims, **characterized in that** the cell cover (1) includes the at least one recess (2), in particular the impression, with the at least one recess (2) in the region of the bottom of the cover.

5. The button cell according to any of the preceding claims, **characterized in that** the at least one recess (2) is at least one elongate recess, in particular at least one groove or notch.

6. The button cell according to any of the preceding claims, **characterized in that** the at least one recess (2) forms a regular pattern.

7. The button cell according to any of the preceding claims, **characterized in that** the at least one recess (2) is concentrically arranged, circular grooves.

8. The button cell according to any of the preceding claims, **characterized in that** the at least one recess (2) has a substantially rectangular or pentagonal cross section.

9. The button cell according to any of the preceding claims, **characterized in that** the housing is made of metal, in particular made of nickel-plated deep-drawn metal sheet.

10. The button cell according to any of the preceding claims, **characterized in that** the depth of the at least one recess (2) is between 5 % and 50 % of the thickness of the housing.

11. A method for producing a button cell, **characterized in that** a housing half part (1) is provided, which has on its inside at least one recess (2) provided with at least one undercut (3), and wherein electrode material is introduced into the half part (1) in such a manner that an interlocking connection is obtained between the resulting electrode and the half part (1).

12. The method according to claim 11, **characterized in that** the electrode material is pressed into the cover.

13. The method according to claim 11 or 12, **characterized in that** for providing the housing half part (1) at least one first recess is impressed into a crude half part using a first stamp die (7), and in a further step the produced at least one first recess is provided with at least one undercut (3), **in that** using a second stamp die at least one second recess (4) is impressed into the housing half part such that the cross section of the at least one first recess, in particular in the vicinity of the upper edge, is narrowed.

## Revendications

1. Cellule-bouton présentant un boîtier en plusieurs pièces qui loge des électrodes, ainsi qu'un séparateur, le boîtier en plusieurs pièces comportant une cuvette de cellule et un couvercle (1) de cellule,
**caractérisée en ce que**
le couvercle (1) de cellule présente sur son côté extérieur au moins un creux (2) doté d'au moins une contre-dépouille (3) et
**en ce qu'**une liaison en correspondance géométrique est formée entre le couvercle (1) de cellule et l'anode.

2. Cellule-bouton selon la revendication 1, **caractérisée en ce que** l'anode est une anode métallique, en particulier une anode qui contient du lithium métallique ou du zinc métallique.

3. Cellule-bouton selon l'une des revendications 1 ou 2, **caractérisée en ce que** le ou les creux (2) font partie d'un gaufrage tridimensionnel prévu sur le côté intérieur du couvercle (1) de la cellule.

4. Cellule-bouton selon l'une des revendications précédentes, **caractérisée en ce que** le couvercle (1) de cellule présente le ou les creux (2) et en particulier le gaufrage doté du ou des creux (2) au niveau du fond du couvercle.

5. Cellule-bouton selon l'une des revendications précédentes, **caractérisée en ce que** le ou les creux (2) sont au moins un creux allongé et en particulier au moins une rainure ou une entaille.

6. Cellule-bouton selon l'une des revendications précédentes, **caractérisée en ce que** le ou les creux (2) forment un motif régulier.

7. Cellule-bouton selon l'une des revendications précédentes, **caractérisée en ce que** le ou les creux (2) forment une rainure circulaire disposée concentriquement.

8. Cellule-bouton selon l'une des revendications précédentes, **caractérisée en ce que** le ou les creux (2) présentent une section transversale essentiellement rectangulaire ou pentagonale.

9. Cellule-bouton selon l'une des revendications précédentes, **caractérisée en ce que** le boîtier est constitué de métal et en particulier d'une tôle nickelée emboutie.

10. Cellule-bouton selon l'une des revendications précédentes, **caractérisée en ce que** la profondeur du ou des creux (2) représente entre 5 % et 50 % de l'épaisseur du boîtier.

11. Procédé de fabrication d'une cellule-bouton, **caractérisé en ce qu'**une moitié de boîtier (1) qui présente sur son côté intérieur au moins un creux (2) doté d'au moins une contre-dépouille (3) est préparée et
**en ce qu'**un matériau d'électrode est placé dans la moitié (1) de manière à former une liaison en correspondance géométrique entre l'électrode ainsi obtenue et la moitié (1).

12. Procédé selon la revendication 11, **caractérisé en ce que** le matériau d'électrode est enfoncé dans le couvercle.

13. Procédé selon l'une des revendications 11 ou 12, **caractérisé en ce que** pour préparer la moitié (1) de boîtier, au moins un premier creux est ménagé dans une moitié non traitée de boîtier à l'aide d'un poussoir de gaufrage (7) et **en ce que** dans une autre étape, le ou les premiers creux ainsi formés sont dotés d'au moins une contre-dépouille (3) en formant un deuxième creux (4) au moyen d'un deuxième poussoir de gaufrage dans la moitié de boîtier de telle sorte que la section transversale du ou des premiers creux soit rétrécie en particulier au niveau de son bord supérieur.
